# FASCICULE DE BREVET EUROPEEN

(11) **EP 0 953 487 B1**
(45) Date de publication et mention de la délivrance du brevet: **28.05.2003**
(21) Numéro de dépôt: 99400936.3
(22) Date de dépôt: 16.04.1999
(51) Int. Cl.: B60R 25/02

(54) **Antivol de colonne de direction comportant des moyens perfectionnés de blocage du pêne**
Diebstahlsschutzvorrichtung für eine Steuersäule mit Mitteln zur Bolzenverriegelung
Anti-theft device for steering column with means for blocking of the bolt

(30) Priorité: 21.04.1998 FR 9805136
(43) Date de publication de la demande: 03.11.1999
(73) Titulaire: Antivols Simplex S.A., 21059 Dijon (FR)
(72) Inventeur: Canard, Louis, 58000 Nevers (FR)
(74) Mandataire: Kohn, Philippe

(56) Documents cités:
- DE-A- 3 146 058
- DE-B- 2 935 556
- DE-U- 9 208 698

## Description

L'invention concerne un antivol de colonne de direction comportant des moyens perfectionnés de blocage du pêne.

L'invention se rapporte plus particulièrement à un antivol de colonne de direction, du type comportant une première partie renfermant un pêne qui, dans une position antivol, est destiné à immobiliser en rotation une colonne de direction, et une seconde partie renfermant un élément de commande du pêne qui commande le pêne entre sa position antivol et une position dégagée, du type dans lequel il est prévu des moyens pour bloquer le pêne lorsque les deux parties de l'antivol sont séparées l'une de l'autre, et du type dans lequel les moyens de blocage du pêne comportent un doigt de blocage qui est monté à coulissement axial dans la première partie de l'antivol, qui est sollicité vers une position avancée de blocage par un élément élastique et qui est retenu dans une position reculée escamotée, tant que les deux parties de l'antivol ne sont pas séparées, par un pion de retenue qui coopère avec la seconde partie de l'antivol.

Un tel dispositif est par exemple décrit dans le document FR-A-2.679.504.

Le but d'un tel dispositif est notamment de renforcer la résistance de l'antivol à toute tentative d'effraction. Il s'agit d'éviter que l'on puisse désactiver l'antivol trop facilement, notamment en forçant les moyens de commande de celui-ci. En effet, l'antivol comporte, en plus du pêne, des moyens de commande de ce pêne qui ont généralement pour rôle d'assurer la reconnaissance de l'utilisateur qui veut conduire le véhicule. Un tel dispositif de reconnaissance est par exemple réalisé sous la forme d'un verrou rotatif qui, en principe, ne peut être actionné qu'à l'aide d'une clé conforme spécifique.

Cependant, il est connu que l'on puisse forcer un tel verrou en appliquant sur celui-ci des efforts modérément importants.

Aussi, il a déjà été prévu de pouvoir séparer l'antivol en deux parties, l'une comportant le pêne d'immobilisation de la colonne et l'autre comportant les moyens de commande du pêne, de telle manière que, en tentant de forcer le verrou rotatif, on provoque obligatoirement une rupture de l'antivol selon une ligne de rupture programmée, cette rupture déclenchant la mise en oeuvre des moyens de blocage de la colonne de direction.

Le dispositif décrit dans le brevet FR-A-2.679.504 décrit des moyens de blocage du pêne qui font appel à un doigt de blocage, à un élément élastique et à un pion de retenue du doigt de blocage dans une position escamotée.

Comme on peut le voir dans ce document, le doigt de blocage et le pion de retenue coulissent chacun dans un logement spécifique, ces deux logements étant aménagés selon des directions perpendiculaires. Outre les difficultés de réalisation de ces logements aux orientations différentes, cette conception nécessite aussi des opérations de montage complexes car devant se faire dans un ordre prédéterminé selon plusieurs directions. Par ailleurs, ce dispositif nécessite une très grande précision quant à la dimension du pion de retenue et quant au positionnement relatif du logement qui reçoit le doigt de blocage par rapport au corps du verrou rotatif. En effet, on peut voir que le déplacement du pion de retenue entre sa position de retenue et sa position inactive est très faible si bien que la moindre imprécision dans les dimensions des pièces peut résulter soit en un déclenchement intempestif des moyens de blocage du pêne, soit au contraire en une impossibilité de montage des moyens de commande du pêne.

L'invention a donc pour objet de proposer une nouvelle conception des moyens de blocage du pêne qui permettent à la fois de faciliter la fabrication et le montage de l'antivol et qui permettent notamment de prévoir des tolérances de dimensionnement plus grandes pour les pièces constitutives du dispositif.

Dans ce but, l'invention propose un antivol de colonne de direction, du type comportant une première partie renfermant un pêne qui, dans une position antivol, est destiné à immobiliser en rotation une colonne de direction, et une seconde partie renfermant un élément de commande du pêne qui commande le pêne entre sa position antivol et une position dégagée, du type dans lequel il est prévu des moyens pour bloquer le pêne lorsque les deux parties de l'antivol sont séparées l'une de l'autre, et du type dans lequel les moyens de blocage du pêne comportent un doigt de blocage qui est monté à coulissement axial dans la première partie de l'antivol, qui est sollicité vers une position avancée de blocage par un élément élastique et qui est retenu dans une position reculée escamotée, tant que les deux parties de l'antivol ne sont pas séparées, par un pion de retenue qui coopère avec la seconde partie de l'antivol, caractérisé en ce que le pion de retenue est monté à coulissement dans la première partie de l'antivol selon la direction axiale de coulissement du doigt de blocage, en ce qu'il est maintenu dans une position de retenue par appui contre la seconde partie de l'antivol tant que les deux parties ne sont pas séparées, et en ce que, après la séparation des deux parties, le pion de retenue est repoussé vers une position reculée par l'élément élastique qui sollicite le doigt de blocage vers sa position avancée de blocage.

Selon d'autres caractéristiques de l'invention :
- le doigt de blocage coulisse axialement dans une gouttière étagée qui présente au moins deux tronçons consécutifs parmi lesquels un tronçon avant présente une largeur transversale inférieure à celle du tronçon arrière, le doigt de blocage comporte un talon arrière qui s'étend transversalement et dont la largeur transversale est sensiblement égale à celle du tronçon avant, et le pion de retenue coulisse dans le tronçon arrière de la gouttière et comporte une patte avant qui, en position de retenue du pion, est agencée axialement au niveau du talon dans le tronçon arrière de manière à forcer le talon transversalement sur un côté de la gouttière, le talon étant alors en regard et en arrière d'une face transversale d'épaulement qui est formée au raccordement des tronçons et qui est tournée vers l'arrière ;
- lorsque les deux parties de l'antivol sont séparées, le pion de retenue recule vers l'arrière au-delà du talon arrière du doigt de blocage de telle sorte que le talon peut s'engager, sous l'effet de l'élément élastique, dans le tronçon avant de la gouttière ;
- la face transversale d'épaulement est inclinée en direction de l'axe de la gouttière ;
- le tronçon arrière de la gouttière débouche à l'arrière dans une zone d'interface entre les deux parties de l'antivol ;
- les moyens de blocage du pêne comportent des moyens pour limiter la course du pion de retenue vers l'arrière lorsque les deux parties de l'antivol sont séparées ;
- le doigt de blocage comporte une tête avant qui, en position de blocage, est destinée à être reçue dans une cavité correspondante du pêne, et qui, en position escamotée, s'étend dans un tronçon de guidage de la gouttière agencé en avant du tronçon avant, et la tête du doigt de blocage est reçue sans jeu transversal dans le tronçon de guidage ;
- le pion de retenue comporte un corps central de guidage qui est prolongé axialement vers l'avant et vers l'arrière par des pattes avant et arrière, et la patte arrière est destinée à venir en appui contre un élément lié à la seconde partie de l'antivol ;
- le corps central de guidage du pion de retenue présente une section transversale correspondante de celle du tronçon arrière de la gouttière ;
- l'élément élastique est constitué par un ressort hélicoïdal de compression qui est comprimé axialement entre le talon du doigt de blocage et le corps central du pion de retenue ;
- les deux parties de l'antivol comportent un boîtier commun réalisé en une seule pièce dans lequel les deux parties sont délimitées l'une de l'autre par une ligne d'amorce de rupture ;
- le doigt de blocage est susceptible de bloquer le pêne dans l'une et l'autre de ses positions antivol et dégagée ;
- le doigt de blocage coulisse perpendiculairement à la trajectoire du pêne entre ses positions antivol et escamotée.

D'autres caractéristiques et avantages de l'invention apparaîtront à la lecture de la description détaillée qui suit pour la compréhension de laquelle on se reportera aux dessins annexés dans lesquels :
- les figures 1 et 2 sont des vues schématiques en coupe selon un plan perpendiculaire à une colonne de direction de véhicule automobile illustrant l'immobilisation en rotation de la colonne par un dispositif d'antivol dont le pêne est représenté respectivement sur les figures 1 et 2 en position antivol et en position dégagée ;
- les figures 3 et 4 sont des vues en section du dispositif d'antivol, selon deux plans perpendiculaires entre eux, illustrant plus particulièrement les moyens de blocage du pêne lorsque le doigt de blocage est en position escamotée ;
- les figures 5 et 6 sont des vues similaires à celles des figures 3 et 4 illustrant l'antivol suite à une séparation de ses deux parties, entraînant la mise en action des moyens de blocage ; et
- les figures 7 et 8 sont des vues de détail agrandies des figures 3 et 5 illustrant plus particulièrement les moyens de blocage.

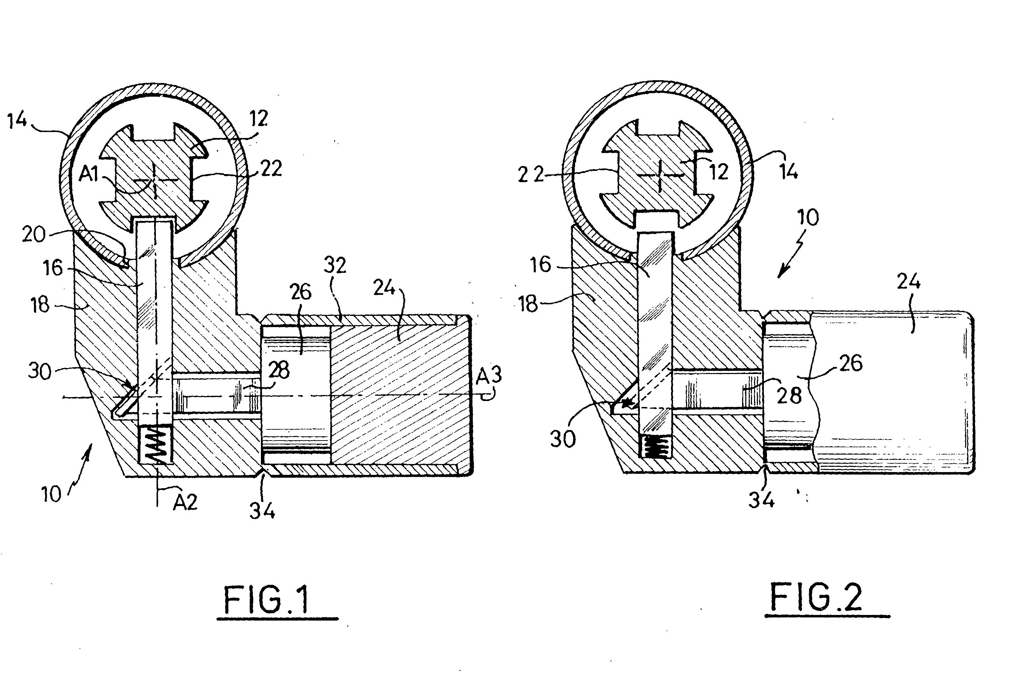

On a illustré sur la figure 1 un antivol 10 de véhicule automobile qui est destiné à immobiliser en rotation un arbre de colonne de direction 12. L'arbre de colonne 12 est monté à rotation autour de son axe A1 dans un tube de colonne 14, qui est fixe dans le véhicule, et sur lequel est fixé l'antivol 10.

L'antivol 10 comporte un pêne 16 qui s'étend longitudinalement selon une direction A2 qui est sensiblement perpendiculaire à l'axe A1 de la colonne 12. Le pêne 16 est monté à coulissement selon la direction A2 dans une première partie 18 de l'antivol qui est réalisée sous la forme d'un boîtier particulièrement rigide.

Le pêne 16 est destiné à être déplacé entre une position antivol illustrée à la figure 1 et une position dégagée illustrée à la figure 2. En position antivol, une extrémité du pêne 16 dépasse radialement en direction de l'axe A1 à l'intérieur du tube de colonne 14, au travers d'une ouverture 20 pour être reçue dans l'un d'une série de logements 22 complémentaires aménagés dans l'arbre 12 de la colonne de direction. Les logements 22 sont répartis angulairement de manière régulière autour de l'axe A1 de telle sorte que l'arbre 12 peut être immobilisé en de multiples positions angulaires lorsque le pêne 16 est engagé dans l'un des logements 22.

Au contraire, lorsque le pêne 16 est dégagé des logements 22, l'arbre 12 de la colonne de direction est libre en rotation autour de son axe dans le tube 14.

De manière connue, l'antivol 10 comporte des moyens pour assurer la commande du pêne, ces moyens devant pouvoir par ailleurs permettre d'une part d'identifier un utilisateur autorisé et, d'autre part, de commander l'alimentation de différents circuits électriques du véhicule.

A cet effet, l'antivol 10 comporte par exemple un verrou rotatif 24 destiné à être commandé par une clef, et un commutateur rotatif 26 entraîné par un rotor du verrou. Lorsqu'une clef conforme est engagée dans le verrou 24, la rotation de celui-ci est autorisée, ce qui par exemple peut provoquer le coulissement d'une tirette 28 selon la direction de l'axe A3 du verrou 24 entre une position verrouillée illustrée à la figure 1 et une position déverrouillée à la figure 2. Le verrou 24 commande simultanément le commutateur rotatif 26.

La direction A3 de coulissement de la tirette 28 est perpendiculaire à celle A2 du pêne 16, et ces deux éléments sont liés l'un à l'autre par des éléments à rampe 30 qui permettent de convertir un mouvement de translation en un autre mouvement de translation. Toutefois, les moyens de commande du déplacement du pêne peuvent être réalisés suivant d'autres manières, par exemple en utilisant une came à excentrique entraînée par le verrou 24.

Comme on peut le voir sur les figures, le verrou 24 et le commutateur 26 sont reçus dans une seconde partie 32 du boîtier de l'antivol qui s'étend sensiblement selon la direction de l'axe A3 depuis la première partie 18. Dans l'exemple de réalisation illustré sur les figures, le boîtier de l'antivol est réalisé en une seule pièce mais il est prévu une ligne d'amorce de rupture 34 qui permet aux deux parties 18, 32 de se séparer l'une de l'autre si un effort trop violent est appliqué sur la seconde partie 32 qui est bien entendu forcément accessible depuis l'habitacle du véhicule, afin que le conducteur puisse y introduire une clef.

Conformément aux enseignements de l'invention, l'antivol 10 est muni de moyens pour assurer le blocage du pêne 16 en cas de séparation des deux parties 18, 32 du boîtier de l'antivol 10.

Selon un aspect de l'invention, ce blocage du pêne peut intervenir indifféremment lorsque le pêne est en position antivol ou en position dégagée. En effet, dans ce dernier cas, il est particulièrement avantageux d'immobiliser le pêne en position dégagée au cas où la rupture du boîtier d'antivol se produirait, par exemple suite à un accident.

En effet, il ne faudrait pas que le conducteur, pouvant éventuellement poursuivre sa route, subisse un blocage de la colonne de direction en cours de route du fait d'un enclenchement intempestif du pêne consécutif à la dégradation de l'antivol.

Dans ce but, le pêne 16 comporte, dans une face latérale 36, deux cavités 38 dont l'une ou l'autre, en fonction de la position du pêne 16, débouche en regard d'une gouttière 40 aménagée dans la première partie 18 du boîtier de l'antivol. La gouttière 40 s'étend sensiblement selon la direction parallèle à l'axe A3 du verrou 24 et elle débouche axialement vers l'avant en regard de l'une des cavités 38 et axialement vers l'arrière dans une face 42 d'interface entre les deux parties 18, 32 du boîtier de l'antivol.

La gouttière 40 présente successivement d'arrière en avant un tronçon arrière 44, un tronçon avant 46 et un tronçon de guidage 48 qui est agencé en avant du tronçon avant 46 et qui débouche en regard de la cavité 38.

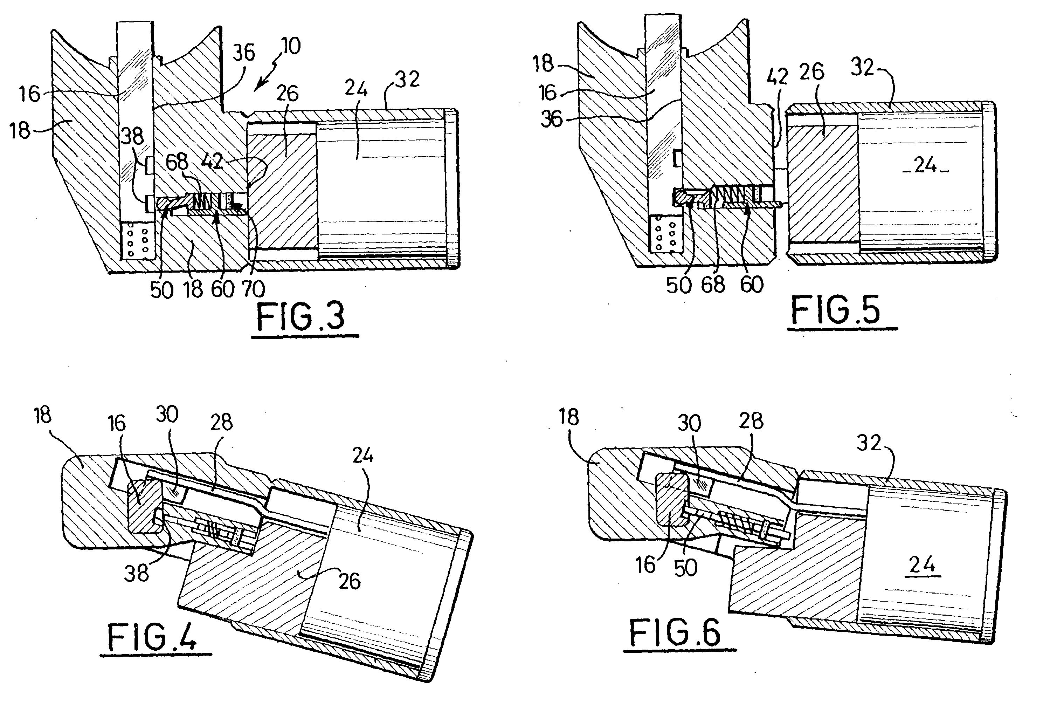

Un doigt de blocage 50 est monté à coulissement selon la direction de l'axe A3 dans la gouttière 40. Le doigt 50 comporte une tête avant 52, une tige centrale 54 et un talon arrière 56. La tête 52 présente une forme sensiblement arrondie et elle est reçue de manière à pouvoir pivoter sans jeu transversal dans le tronçon de guidage 48 lorsque le doigt de blocage 50 est dans une position reculée escamotée illustrée aux figures 3, 4 et 7. Au contraire, lorsque le doigt de blocage 50 est dans une position avancée de blocage, illustrée aux figures 5, 6 et 8, la tête 52 est engagée dans l'une des cavités 38 du pêne 16 tandis que la tige centrale 54 et le talon 56 sont respectivement engagés dans le tronçon de guidage 48 et le tronçon avant 46 de la gouttière 40 de telle sorte que le doigt 50 bloque toute possibilité du mouvement du pêne 16 selon sa direction A2 de coulissement.

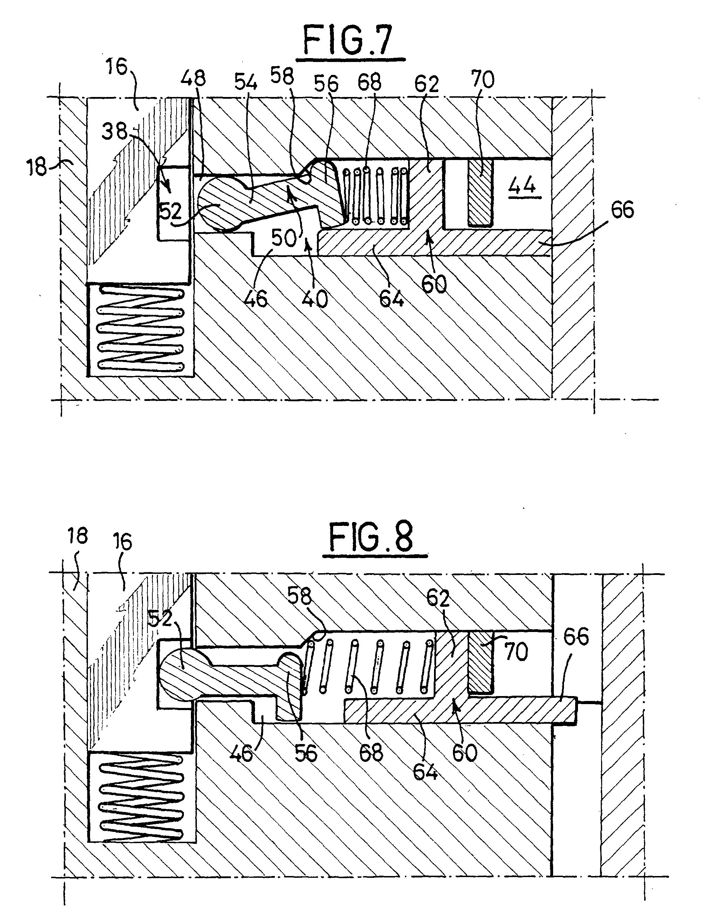

Comme on peut le voir par exemple sur la figure 8, la largeur transversale du talon arrière 56 du doigt 50 est sensiblement égale à celle du tronçon avant 46 de la gouttière 40. Le tronçon arrière 44 présente lui une dimension transversale supérieure à celle du tronçon avant 46 de sorte que, entre les deux tronçons, il est délimité, sur l'un des côtés de la gouttière 40 par une face transversale d'épaulement 58 qui est tournée vers l'arrière tout en étant légèrement inclinée en direction de l'axe A3.

Les moyens de blocage comportent aussi un pion de retenue 60 qui est monté à coulissement selon la direction parallèle à l'axe A3 dans le tronçon arrière 44. Le pion de retenue 60 comporte notamment un corps central de guidage 62, de section sensiblement correspondante à celle du tronçon arrière 44, depuis lequel s'étendent respectivement vers l'avant et vers l'arrière une patte avant 64 et une patte arrière 66. Les pattes avant et arrière 64, 66 sont alignées l'une avec l'autre et elles coulissent le long d'un côté opposé de la gouttière 40 par rapport au côté dans lequel est aménagée la face transversale d'épaulement 58. Ce côté opposé ne présente pas de discontinuité entre les tronçons avant 46 et arrière 44.

Selon l'invention, la patte avant 64 présente une largeur transversale égale à la différence de largeur entre le tronçon arrière 44 et le talon arrière 56 du doigt de blocage 50. De la sorte, il est possible de disposer les composants du dispositif de blocage dans la position illustrée à la figure 7. Dans cette position, le doigt de blocage 50 est donc en position escamotée et son talon arrière 56, qui s'étend transversalement de part et d'autre de la tige centrale 54, est agencé axialement en arrière de la face transversale d'épaulement 58, donc dans le tronçon arrière 44, et transversalement en appui du côté de la gouttière 40 où est formée justement cette face transversale d'épaulement 58. Au contraire, la patte avant 64 du pion de retenue 60 s'étend alors axialement au même niveau que le talon 56 de telle sorte qu'elle empêche celui-ci de se déplacer transversalement et qu'ainsi le doigt 50 ne peut être déplacé axialement vers l'avant car le talon 56 vient en butée contre la surface transversale d'épaulement 58.

Il est à noter que lorsque les deux parties 18, 32 de l'antivol 10 ne sont pas séparées, ce qui correspond à un état normal de l'antivol, la patte arrière 66 du pion de retenue 60 est en appui axialement vers l'arrière contre une face avant du commutateur rotatif 26. Bien entendu, on pourrait prévoir que la patte arrière 66 soit en appui contre tout autre élément de surface lié à la seconde partie 18 du boîtier de l'antivol. Ainsi, le pion de retenue 60 est maintenu dans cette position de retenue par la seconde partie de l'antivol et il empêche alors le doigt de blocage 50 d'atteindre sa position de blocage.

Un ressort hélicoïdal de compression 68 s'étend parallèlement à la patte avant 64 du pion de retenue 60 et il est comprimé axialement entre le talon arrière 56 du doigt de blocage 50, qu'il sollicite donc vers l'avant, et le corps de guidage 62 du pion de retenue 60, qu'il sollicite donc vers l'arrière.

De la sorte, lorsque les deux parties 18, 32 de l'antivol se séparent suite à une rupture du boîtier au niveau de l'amorce de rupture 34, le pion de retenue 60 n'est plus maintenu immobilisé par le commutateur 26 et, sous l'action du ressort 68, il recule vers l'arrière jusqu'à une position dans laquelle il s'est effacé au-delà du talon arrière 56 du doigt de blocage. Celui-ci, qui est alors soumis à l'action du ressort 68 qui le sollicite vers l'avant, peut alors basculer légèrement transversalement de manière à s'engager dans le tronçon avant 46 de la gouttière 40.

On peut voir par ailleurs qu'il est prévu dans le tronçon arrière 44 des moyens pour limiter la course du pion de retenue 60 vers l'arrière. Ces moyens sont par exemple réalisés sous la forme d'une pastille 70 immobilisée dans le tronçon arrière 44, en arrière du corps de guidage 62.

De la sorte, et comme on peut le voir à la figure 8, une fois le pion de retenue 60 en appui contre la pastille 70, le ressort 68 peut continuer à exercer une action sur le doigt de blocage 50 visant à le maintenir dans la position de blocage dans laquelle la tête 52 est engagée dans l'une des cavités 38 du pêne 16.

Ainsi, comme on peut le voir d'après les figures, les moyens de blocage du pêne 16 sont d'une fabrication facile et d'un montage aisé. En effet, tous les éléments sont alignés selon une même direction parallèle à l'axe A3 du verrou 24, ce qui correspond également à la direction générale de la tirette 28 de commande du pêne 16.

## Revendications

1. Antivol de colonne de direction, du type comportant une première partie (18) renfermant un pêne (16) qui, dans une position antivol, est destiné à immobiliser en rotation une colonne de direction, et une seconde partie (32) renfermant un élément de commande (24, 28) du pêne (16) qui commande le pêne (16) entre sa position antivol et une position dégagée, du type dans lequel il est prévu des moyens pour bloquer le pêne (16) lorsque les deux parties (18, 32) de l'antivol (10) sont séparées l'une de l'autre, et du type dans lequel les moyens de blocage du pêne comportent un doigt de blocage (50) qui est monté à coulissement axial dans la première partie (18) de l'antivol (10), qui est sollicité vers une position avancée de blocage par un élément élastique (68) et qui est retenu dans une position reculée escamotée, tant que les deux parties (18, 32) de l'antivol ne sont pas séparées, par un pion de retenue (60) qui coopère avec la seconde partie (32) de l'antivol,
**caractérisé en ce que** le pion de retenue (60) est monté à coulissement dans la première partie (18) de l'antivol selon la direction axiale (A3) de coulissement du doigt de blocage (50), **en ce qu'**il est maintenu dans une position de retenue par appui contre la seconde partie (32) de l'antivol tant que les deux parties (18, 32) ne sont pas séparées, et **en ce que**, après la séparation des deux parties (18, 32), le pion de retenue (60) est repoussé vers une position reculée par l'élément élastique (68) qui sollicite le doigt de blocage (50) vers sa position avancée de blocage.

2. Antivol selon la revendication 1, **caractérisé en ce que** le doigt de blocage (50) coulisse axialement dans une gouttière étagée (40) qui présente au moins deux tronçons (44, 46) consécutifs parmi lesquels un tronçon avant (46) présente une largeur transversale inférieure à celle du tronçon arrière (44), **en ce que** le doigt de blocage (50) comporte un talon arrière (56) qui s'étend transversalement et dont la largeur transversale est sensiblement égale à celle du tronçon avant (46), et **en ce que** le pion de retenue (60) coulisse dans le tronçon arrière (44) de la gouttière (40) et comporte une patte avant (64) qui, en position de retenue du pion (60), est agencée axialement au niveau du talon (56) dans le tronçon arrière (44) de manière à forcer le talon (56) transversalement sur un côté de la gouttière (40), le talon étant alors en regard et en arrière d'une face transversale d'épaulement (58) qui est formée au raccordement des tronçons (44, 46) et qui est tournée vers l'arrière.

3. Antivol selon la revendication 2, **caractérisé en ce que** lorsque les deux parties (18, 32) de l'antivol (10) sont séparées, le pion de retenue (60) recule vers l'arrière au-delà du talon arrière (56) du doigt de blocage (50) de telle sorte que le talon (56) peut s'engager, sous l'effet de l'élément élastique (68), dans le tronçon avant (46) de la gouttière (40).

4. Antivol selon l'une des revendications 1 ou 2, **caractérisé en ce que** la face transversale d'épaulement (58) est inclinée en direction de l'axe de la gouttière (40).

5. Antivol selon l'une quelconque des revendications 2 à 4, **caractérisé en ce que** le tronçon arrière (44) de la gouttière (40) débouche à l'arrière dans une zone d'interface (42) entre les deux parties (18, 32) de l'antivol (10).

6. Antivol selon l'une quelconque des revendications précédentes, **caractérisé en ce que** les moyens de blocage du pêne comportent des moyens (70) pour limiter la course du pion de retenue (60) vers l'arrière lorsque les deux parties (18, 32) de l'antivol (10) sont séparées.

7. Antivol selon l'une quelconque des revendications 2 à 6, **caractérisé en ce que** le doigt de blocage (50) comporte une tête avant (52) qui, en position de blocage, est destinée à être reçue dans une cavité (38) correspondante du pêne (16), et qui, en position escamotée, s'étend dans un tronçon de guidage (48) de la gouttière (40) agencé en avant du tronçon avant (46), et **en ce que** la tête (52) du doigt de blocage (50) est reçue sans jeu transversal dans le tronçon de guidage (48).

8. Antivol selon l'une quelconque des revendications précédentes, **caractérisé en ce que** le pion de retenue (60) comporte un corps central de guidage (62) qui est prolongé axialement vers l'avant et vers l'arrière par des pattes avant (64) et arrière (66), et **en ce que** la patte arrière (66) est destinée à venir en appui contre un élément (26) lié à la seconde partie (32) de l'antivol (10).

9. Antivol selon la revendication 8 prise en combinaison avec la revendication 2, **caractérisé en ce que** le corps central de guidage (32) du pion de retenue (60) présente une section transversale correspondante de celle du tronçon arrière (44) de la gouttière (40).

10. Antivol selon la revendication 9, **caractérisé en ce que** l'élément élastique est constitué par un ressort hélicoïdal de compression (68) qui est comprimé axialement entre le talon (56) du doigt de blocage (50) et le corps central (62) du pion de retenue (60).

11. Antivol selon l'une quelconque des revendications précédentes, **caractérisé en ce que** les deux parties (18, 32) de l'antivol (10) comportent un boîtier commun réalisé en une seule pièce dans lequel les deux parties (18, 32) sont délimitées l'une de l'autre par une ligne d'amorce de rupture (34).

12. Antivol selon l'une quelconque des revendications précédentes, **caractérisé en ce que** le doigt de blocage (50) est susceptible de bloquer le pêne (16) dans l'une et l'autre de ses positions antivol et dégagée.

13. Antivol selon l'une quelconque des revendications précédentes, **caractérisé en ce que** le doigt de blocage (50) coulisse perpendiculairement à la trajectoire du pêne (16) entre ses positions antivol et escamotée.

## Patentansprüche

1. Lenkschloß mit einem ersten Teil (18), welches einen Sperrbolzen (16) umfaßt, der in einer verriegelten Stellung eine Lenkspindel hinsichtlich ihrer Drehung blockiert, und einem zweiten Teil (32), welches ein Betätigungselement (24, 28) des Sperrbolzens (16) umfaßt, das den Sperrbolzen (16) zwischen seiner verriegelten Stellung und einer entriegelten Stellung betätigt, mit Mitteln zur Blockierung des Sperrbolzens (16), wenn die beiden Teile (18, 32) des Lenkschlosses (10) voneinander getrennt sind, wobei die Mittel zur Blockierung des Sperrbolzens einen Sperrfinger (50) umfassen, der axial verschiebbar in dem ersten Teil (18) des Lenkschlosses (10) angeordnet und durch ein elastisches Element (68) in Richtung einer vorgerückten Blockierstellung belastet ist, und der durch einen Rückhaltezapfen (60), welcher mit dem zweiten Teil (32) des Lenkschlosses zusammenwirkt, in einer zurückgeschobenen versenkten Stellung zurückgehalten wird, solange die beiden Teile (18, 32) des Lenkschlosses nicht voneinander getrennt sind,
**dadurch gekennzeichnet, daß** der Rückhaltezapfen (60) in dem ersten Teil (18) des Lenkschlosses in der axialen Bewegungsrichtung (A3) des Sperrfingers (50) verschiebbar angeordnet ist, daß er in einer zurückgehaltenen Stellung durch Abstützung an dem zweiten Teil (32) des Lenkschlosses gehalten wird, solange die beiden Teile (18, 32) nicht voneinander getrennt sind, und daß der Rückhaltezapfen (60) nach Trennung der beiden Teile (18, 32) durch das elastische Element (68), welches den Sperrfinger (50) in Richtung seiner vorgeschobenen Blockierstellung belastet, in eine zurückgeschobene Stellung zurückdrückbar ist.

2. Lenkschloß nach Anspruch 1, **dadurch gekennzeichnet, daß** der Sperrfinger (50) axial verschiebbar in einer stufenförmig ausgebildeten Rinne (40) angeordnet ist, die mindestens zwei aufeinanderfolgende Abschnitte (44, 46) aufweist, von denen ein vorderer Abschnitt (46) eine Breite besitzt, die kleiner ist als diejenige des hinteren Abschnittes (44), daß der Sperrfinger (50) ein hinteres Ende (56) aufweist, welches sich in Querrichtung erstreckt und dessen Breite im wesentlichen gleich derjenigen des vorderen Abschnittes (46) ist, und daß der Rückhaltezapfen (60) in dem hinteren Abschnitt (44) der Rinne (40) verschiebbar angeordnet ist und einen vorderen Fuß (64) umfaßt, der, in der zurückgehaltenen Stellung des Zapfens (60), axial im Bereich des hinteren Endes (56) des Sperrfingers in dem hinteren Abschnitt (44) angeordnet ist, um das hintere Ende (56) quer gegen eine Seite der Rinne (40) zu drücken, wobei das Ende dann gegenüber und hinter einer querliegenden, durch die Verbindung der Abschnitte (44, 46) gebildeten, nach hinten gerichteten Stirnfläche eines Absatzes (58) angeordnet ist.

3. Lenkschloß nach Anspruch 2, **dadurch gekennzeichnet, daß** für den Fall, daß die beiden Teile (18, 32) des Lenkschlosses (10) getrennt sind, der Rückhaltezapfen (60) nach hinten über das hintere Ende (56) des Sperrfingers (50) hinaus zurückgeschoben wird, so daß das Ende (56) unter der Wirkung des elastischen Elementes (68) in den vorderen Abschnitt (46) der Rinne (40) eingreifen kann.

4. Lenkschloß nach einem der Ansprüche 1 oder 2, **dadurch gekennzeichnet, daß** die querliegende Stirnfläche des Absatzes (58) zur Richtung der Achse der Rinne geneigt angeordnet ist.

5. Lenkschloß nach einem der Ansprüche 2 bis 4, **dadurch gekennzeichnet, daß** der hintere Abschnitt (44) der Rinne (40) rückseitig im Bereich einer Grenzfläche (42) zwischen den beiden Teilen (18, 32) des Lenkschlosses (10) endet.

6. Lenkschloß nach einem der vorhergehenden Ansprüche, **dadurch gekennzeichnet, daß** die Mittel zur Blockierung des Sperrbolzens Mittel (70) enthalten, die eine Verschiebung des Rückhaltezapfens (60) nach hinten begrenzen, wenn die beiden Teile (18, 32) des Lenkschlosses (10) getrennt sind.

7. Lenkschloß nach einem der Ansprüche 2 bis 6, **dadurch gekennzeichnet, daß** der Sperrfinger (50) einen vorderen Kopf (52) umfaßt, der, in der Blockierstellung, von einer Vertiefung (38) des Sperrbolzens (16) aufgenommen wird, und welcher in der eingezogenen Stellung sich innerhalb eines Führungsabschnittes (48) der Rinne (40) erstreckt, die vor dem vorderen Abschnitt (46) angeordnet ist, und daß der Kopf (52) des Sperrfingers (50) von dem Führungsabschnitt (48) ohne seitliches Spiel aufgenommen wird.

8. Lenkschloß nach einem der vorhergehenden Ansprüche, **dadurch gekennzeichnet, daß** der Rückhaltezapfen (60) einen zentralen Führungskörper (62) umfaßt, der axial nach vorne und nach hinten durch einen vorderen Fuß (64) und einen hinteren Fuß (66) verlängert ist, und daß der hintere Fuß (66) an einem mit dem zweiten Teil (32) des Lenkschlosses (10) verbundenen Element (26) abstützbar ausgebildet ist.

9. Lenkschloß nach Anspruch 8 in Verbindung mit Anspruch 2, **dadurch gekennzeichnet, daß** der zentrale Führungskörper (62) des Rückhaltezapfens (60) einen Querschnitt besitzt, der demjenigen des hinteren Abschnittes (44) der Rinne (40) entspricht.

10. Lenkschloß nach Anspruch 9, **dadurch gekennzeichnet, daß** es sich bei dem elastischen Element um eine Zylinderdruckfeder (68) handelt, die axial zwischen dem Ende (56) des Sperrfingers (50) und dem zentralen Körper (62) des Rückhaltezapfens (60) gespannt angeordnet ist.

11. Lenkschloß nach einem der vorhergehenden Ansprüche, **dadurch gekennzeichnet, daß** die beiden Teile (18, 32) des Lenkschlosses (10) ein gemeinsames einstöckig ausgebildetes Gehäuse besitzen, in dem die beiden Teile (18, 32) durch eine Sollbruchlinie (34) voneinander abgegrenzt angeordnet sind.

12. Lenkschloß nach einem der vorhergehenden Ansprüche, **dadurch gekennzeichnet, daß** der Sperrfinger (50) in der Lage ist, den Sperrbolzen (16) in seiner verriegelten und in seiner entriegelten Stellung zu blokkieren.

13. Lenkschloß nach einem der vorhergehenden Ansprüche, **dadurch gekennzeichnet, daß** der Sperrfinger (50) senkrecht zur Bahn des Sperrbolzens (16) zwischen seiner Verriegelungsstellung und seiner eingezogenen Stellung verschiebbar angeordnet ist.

## Claims

1. Steering-column anti-theft device of the type comprising a first part (18) enclosing a bolt (16) which, in an anti-theft position, is intended to rotationally immobilise a steering column, and a second part (32) enclosing a control element (24, 28) for the bolt (16) which controls the bolt (16) between its anti-theft position and a disengaged position, of the type in which means are provided for locking the bolt (16) when the two parts (18, 32) of the anti-theft device (10) are separated from each other, and of the type in which the bolt locking means comprise a locking finger (50) which is mounted for axial sliding in the first part (18) of the anti-theft device (10), which is forced towards an advanced locking position by an elastic element (68) and which is retained in a retracted drawn-back position, as long as the two parts (18, 32) of the anti-theft device are separated, by a retaining stud (60) which cooperates with the second part (32) of the anti-theft device, **characterised in that** the retaining stud (60) is mounted sliding in the first part (18) of the anti-theft device in the axial direction (A3) of sliding of the locking finger (50), **in that** it is maintained in a retaining position by abutment against the second part (32) of the anti-theft device as long as the two parts (18, 32) are not separated, and **in that**, after the separation of the two parts (18, 32), the retaining stud (60) is pushed towards a drawn-back position by the elastic element (68) which forces the locking finger (50) towards its advanced locking position.

2. Anti-theft device according to Claim 1, **characterised in that** the locking finger (50) slides axially in a stepped channel (40) which has at least two consecutive portions (44, 46), amongst which a front portion (46) has a transverse width less than that of the rear portion (44), **in that** the locking finger (50) comprises a rear heel (56) which extends transversely and whose transverse width is substantially equal to that of the front portion (46), **in that** the retaining stud (60) slides in the rear portion (44) of the channel (40) and comprises a front lug (64) which, in the retaining position of the stud (60), is arranged axially at the heel (56) in the rear portion (44) so as to force the heel (56) transversely on one side of the channel (40), the heel then being opposite and behind a transverse shoulder face (58) which is formed at the connection of the portions (44, 46) and which is turned towards the rear.

3. Anti-theft device according to Claim 2, **characterised in that**, when the two parts (18, 32) of the anti-theft device (10) are separated, the retaining stud (60) moves back towards the rear beyond the rear heel (56) of the locking finger (50) so that the heel (56) can engage, under the effect of the elastic element (68), in the front portion (46) of the channel (40).

4. Anti-theft device according to one of Claims 1 or 2, **characterised in that** the transverse shoulder face (58) is inclined in the direction of the axis of the channel (40).

5. Anti-theft device according to any one of Claims 2 to 4, **characterised in that** the rear portion (44) of the channel (40) opens out at the rear in an interface area (42) between the two parts (18, 32) of the anti-theft device (10).

6. Anti-theft device according to any one of the preceding claims, **characterised in that** the bolt locking means comprise means (70) for limiting the travel of the retaining stud (60) towards the rear when the two parts (18, 32) of the anti-theft device (10) are separated.

7. Anti-theft device according to any one of Claims 2 to 6, **characterised in that** the locking finger (50) comprises a front head (52) which, in the locking position, is intended to be received in a corresponding cavity (38) in the bolt (16) and which, in the retracted position, extends in a guidance portion (48) of the channel (40) arranged in front of the front portion (46), and **in that** the head (52) of the locking finger (50) is received without transverse clearance in the guidance portion (48).

8. Anti-theft device according to any one of the preceding claims, **characterised in that** the retaining stud (60) comprises a central guidance body (62) which is extended axially towards the front and towards the rear by front (64) and rear (66) lugs, and **in that** the rear lug (66) is intended to come into abutment against the element (26) connected to the second part (32) of the anti-theft device (10).

9. Anti-theft device according to Claim 8 taken in combination with Claim 2, **characterised in that** the central guidance body (32) of the retaining stud (60) has a transverse section corresponding to that of the rear portion (44) of the channel (40).

10. Anti-theft device according to Claim 9, **characterised in that** the elastic element consists of a helical compression spring (68) which is compressed axially between the heel (56) of the locking finger (50) and the central body (62) of the retaining stud (60).

11. Anti-theft device according to any one of the preceding claims, **characterised in that** the two parts (18, 32) of the anti-theft device (10) comprise a common casing connected in a single piece in which the two parts (18, 32) are delimited from each other by a rupture initiation line (34).

12. Anti-theft device according to any one of the preceding claims, **characterised in that** the locking finger (50) is able to lock the bolt (16) in each of its anti-theft and disengaged positions.

13. Anti-theft device according to any one of the preceding claims, **characterised in that** the locking finger (50) slides perpendicular to the path of the bolt (16) between its anti-theft and retracted positions.
